# EUROPÄISCHE PATENTSCHRIFT

(11) **EP 0 952 475 B1**
(45) Veröffentlichungstag und Bekanntmachung des Hinweises auf die Patenterteilung: **28.04.2004**
(21) Anmeldenummer: 99890115.1
(22) Anmeldetag: 06.04.1999
(51) Int. Cl.: G02C 5/22

(54) **Federscharnier für Brillen**
Resilient hinge for spectacles
Charnière élastique pour lunettes

(30) Priorität: 20.04.1998 AT 65998
(43) Veröffentlichungstag der Anmeldung: 27.10.1999
(73) Patentinhaber: Simon Redtenbacher seel. Wwe. & Söhne GmbH & Co. KG, 4644 Scharnstein (AT)
(72) Erfinder: Blumauer, Walter, Dipl.-Ing, 4644 Scharnstein (AT)
(74) Vertreter: Hübscher, Gerhard, Dipl.-Ing.

(56) Entgegenhaltungen:
- DE-A- 3 115 816
- DE-A- 19 607 362
- FR-A- 2 665 268
- US-A- 5 515 575

## Beschreibung

Die Erfindung betrifft ein Federscharnier für Brillen gemäß dem Oberbegriff des Patentanspruches 1.

Ein derartiges Scharnier ist aus der EP 639 785 A bekannt. Ähnliche Scharniere entnimmt man der EP 378 969 A und der EP 340 161 A. Bei allen diesen Scharnieren sind die Scharnierlappen größer als der die Federn aufnehmende Teil des Gehäuses ausgebildet, weshalb man das Gehäuse gegen den Gelenkbereich des Scharnieres verbreitern bzw. die Scharnierlappen gegenüber dem Gleitteil auskröpfen muß. Die Rastflächen am Scharnierfrontteil sind meist nur für eine Schwenkendstellung am Scharnierlappen dieses Frontteiles ausgebildet, der Hauptanschlag für die der Gebrauchslage entsprechende Streckstellung des Scharniers erfolgt aber zwischen einem seitlich vorstehenden Teil des Scharnierfrontteiles oder sogar zwischen einem Ansatz des Brillenfrontteiles und dem Brillenbügel selbst. Bei diesen letztgenannten Konstruktionen sind das Führungsgehäuse und der Scharnierfrontteil innen am Brillenbügel und am Brillenfrontteil befestigt und der Scharnierfrontteil ist zur Ermöglichung dieser Befestigung ausgekröpft. Aus den erwähnten Gründen ergibt sich eine bestimmte Mindestbaugröße, insbesondere Breite des Scharniers, die für viele Anwendungsfälle als zu globig empfunden wird, wobei noch nachteilig ist, daß bei den meisten Konstruktionen das Scharnier zumindest bei an den Brillenfrontteil angeklappten Bügeln von außen sichtbar wird.

Für die Unterbringung und Führung der vorgespannten Druckfeder sind innerhalb des Führungsgehäuses relativ aufwendige Konstruktionen üblich, wobei in den meisten Fällen die Feder als Schraubenfeder ausgebildet wird, die auf einem Stift oder einer Schraube innerhalb einer zylindrischen Bohrung des Führungsgehäuses angebracht wird und mit einem den oder die Scharnierlappen tragenden Gleitstein, der den eigentlichen Scharniergleitteil bildet, verbunden wird. Die Feder kann bei den Konstruktionen nach den EP 340 161 A und EP 639 785 A vom Vorderende, also von der zu den Scharnierlappen weisenden Seite des Gehäuses eingeschoben und in der Führungsbohrung durch selbsttätig einspringende Rastkörper verankert werden, wobei ein solcher Rastkörper auch von einem vergrößerten Ende der Feder selbst gebildet sein kann. Damit ist eine nachträgliche Demontage unmöglich. Noch aufwendiger ist eine Konstruktion nach der EP 378 969 A, nach der die Feder mit ihrem Vorderende in den Scharniergleitteil und mit ihrem Hinterende in einen über eine Schraube verstellbaren Spannblock eingehängt wird. Hier ist die Feder als Zugfeder auszubilden. Bei allen Ausführungen ergibt sich eine mehrteilige Konstruktion für den aus Scharniergleitteil, Federführung und Federhalterung bestehenden Bausatz, wobei auch die Vor- und Endmontage umständlich und zeitaufwendig ist.

Bei sich gattungsmäßig von Federscharnieren der eingangs genannten Art unterscheidenden Brillenscharnieren, bei denen Brillengestell und Brillenbügel unmittelbar über den Scharnierzapfen schwenkbar verbunden, also in ihrer Relativlage festgelegt sind, wird nach der US 5 515 575 A am Brillengestell ein Scharnieransatz mit Anschlagflächen ausgeformt, gegen den ein durch eine Feder belasteter, im Brillenbügel gelagerter Druckstempel wirkt, der eine Gegenrastfläche für zwei die Schwenkendstellungen definierende Rastflächen am Scharnieransatz aufweist. Bei einer ähnlichen Ausführung nach der FR 2 665 268 A ist ein Druckstempel, der den am Brillengestell angebrachten Scharnierzapfen aufnimmt, aus dem Bügel ausziehbar gelagert, wobei die sonst übliche Schraubenfeder durch eine in den Druckstempel und in eine zur Stempelführung offene Rastöffnung des Brillenbügels eingehängte vorgeformte Blattfeder ersetzt ist. Beide beschriebenen Konstruktionen benötigen entsprechend dickwandige Brillengestelle und einen großen Querschnitt aufweisende Brillenbügel.

Aufgabe der Erfindung ist demnach die Schaffung eines Federscharnieres der eingangs genannten Art, das eine konstruktiv einfache Ausgestaltung und dabei im Bedarfsfall eine wesentliche Verringerung der Einbaumaße, insbesondere des Einbauquerschnittes, ermöglicht, keine zusätzlichen Anschläge oder Rastflächen zwischen Bügel und Brillenfront benötigt und bei dem nach einer Teilaufgabe auch das Problem einer einfachen, platzsparenden und dabei betriebssicheren Unterbirngung und Führung der Druckfeder gelöst ist.

Die gestellte Hauptaufgabe wird erfindungsgemäß durch die Merkmale des Patentanspruches 1 gelöst.

Die angestrebte geringe Baugröße wird vor allem durch die besondere Formgestaltung der Scharnierlappen im Zusammenwirken mit den entsprechend ausgebildeten, mit ihnen zusammenwirkenden Endteilen des Gehäuses ermöglicht, wobei der von der Außenwand des Führungsgehäuses gebildete Vorsprung mit seiner Innenseite nicht nur eine Rastfläche für die Bestimmung der Schwenkendstellungen bildet, sondern auch den Scharnierzapfenbereich nach außen, also nach der Sichtseite, abdeckt, so daß dieser Bereich zumindest in der Strecklage der beiden Scharnierteile unsichtbar bleibt.

Die bevorzugte rechteckig-prismatische Form des Führungsgehäuses erleichtert und vereinfacht die Herstellung, es sind aber auch andere Gehäuseformen möglich, wobei allerdings möglichst zumindest die Innenseite der Außenwand eben auszuführen wäre.

Im Gegensatz zu allen bekannten Konstruktion wird erfindungsgemäß eine Ausführung nach Anspruch 2 möglich. Die Dicke des Scharniergleitteiles kann dabei auf die Dicke des Scharnierlappens reduziert werden, wobei sich eine äußerst einfache Gesamtform für den Scharniergleitteil ergibt, wobei überdies die Scharnierlappen des Scharnierfrontteiles und auch der gesamte Frontteil selbst mit seiner Ober- und Unterseite in der gleichen Ebene wie die Ober- und Unterseite des Führungsgehäuses liegen kann.

Eine bevorzugte, einfache, aber trotzdem eine sichere Verrastung des Scharnieres in beiden Gebrauchsendstellungen gewährleistenden Ausführung ist in Anspruch 3 angegeben. Selbstverständlich ist auch bei dieser Ausführung das Überschwenken des Scharnieres. d. h. das Verschwenken über die Strecklage hinaus bei entsprechender Belastung des Brillenbügels möglich, wobei sich bei diesem Überschwenken der den Anschlag bildende Absatz am Rand der vorgezogenen Außenwand des Führungsgehäuses abstützt.

Die angestrebte Vereinfachung in der Unterbringung und Montage der Feder läßt sich erfindungsgemäß durch eine Ausbildung gemäß Anspruch 4 erreichen. Dabei sind für die gesamte Federhalterung keine zusätzlichen Bauteile notwendig und es ist im Bedarfsfall sogar möglich, die Feder mit dem Scharniergleitteil auszuwechseln.

Weitere Einzelheiten und Vorteile des Erfindungsgegenstandes entimmt man der nachfolgenden Zeichnungsbeschreibung.

In der Zeichnung ist der Erfindungsgegenstand beispielsweise veranschaulicht. Es zeigen
- Fig. 1: ein erfindungsgemäßes Federschamier in der dem Einklappen der Brillenbügel an die Brillenfront entsprechenden abgewinkelten Stellung in Draufsicht,
- Fig. 2: das Scharnier nach Fig. 1 in der Streckstellung,
- Fig. 3: das Scharnier nach Fig. 1 in einer Stellung beim Überschwenken,
- Fig. 4: das Führungsgehäuse vom Vorderende her gesehen in Ansicht,
- Fig. 5: den Scharnierfrontteil in Ansicht,
- Fig. 6: den Scharniergleitteil mit eingelegter Feder in Draufsicht und
- Fig. 7: eine Seitenansicht zu Fig. 6.

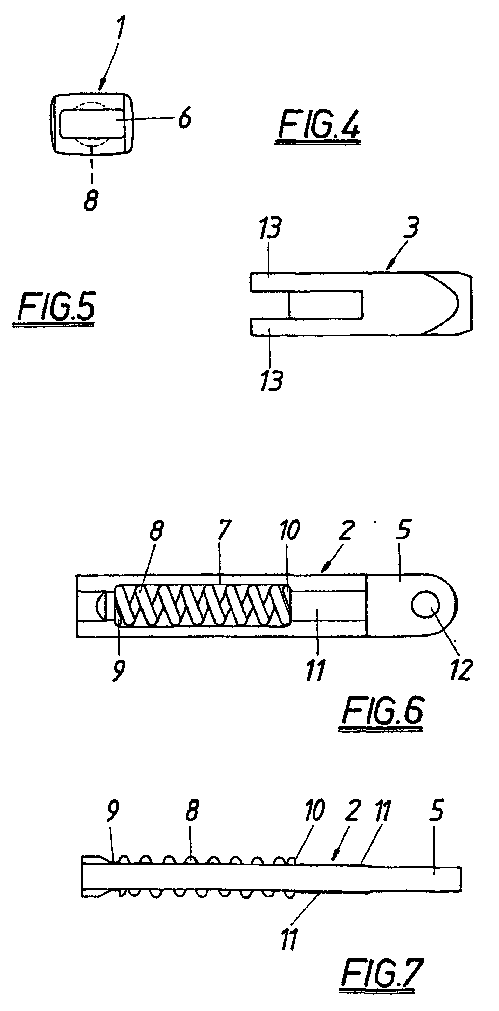

Das Federscharnier besitzt ein am Bügel einer Brille befestigbares Führungsgehäuse 1 für einen Scharniergleitteil 2 und einen am Brillengestell anbringbaren Scharnierfrontteil 3. Das Führungsgehäuse 1 hat, wie auch Fig. 4 zeigt, eine rechteckig-prismatische Grundform mit entsprechender Höhlung, ist am Hinterende durch einen einsetzbaren Verschlußteil 4 abschließbar und nimmt den insbesondere aus den Fig. 6 und 7 in den Einzelheiten ersichtlichen Scharniergleitteil 2 auf, der mit einem Scharnierlappen 5 durch eine an die Dicke dieses Gleitteiles bzw. des Scharnierlappens angepaßte frontseitige Öffnung 6 des Gehäuses 1 herausgeführt ist. Der Scharniergleitteil 2 besitzt ein Langloch 7, das mit Abstand vom Scharnierlappen 5 endet und in dem eine als Schraubenfeder ausgebildete Druckfeder 8 mit ihren Enden 9, 10 abgestützt ist. Innerhalb des Führungsgehäuses 1 ist ein Anschlag f'ür das Federende 10 durch die Horizontalränder der bis zu diesem Bereich flach ausgeführten Öffnung 6 gebildet. Ab diesem Anschlag ist das Gehäuse innen an den Durchmesser der Feder 8 angepaßt, so daß hier die Feder frei spielen kann. Wird der Scharniergleitteil 2 am Scharnierlappen 5 herausgezogen, so wird die Feder zwischen ihrem im Langloch 7 abgestützten Ende 9 und dem erwähnten Anschlag des Gehäuses weiter gespannt. Am Scharniergleitteil können noch oben und unten außerhalb des Langloches 7 leicht vorspringende und genau an die Öffnung 6 angepaßte Gleitführungen 11 ausgeformt sein.

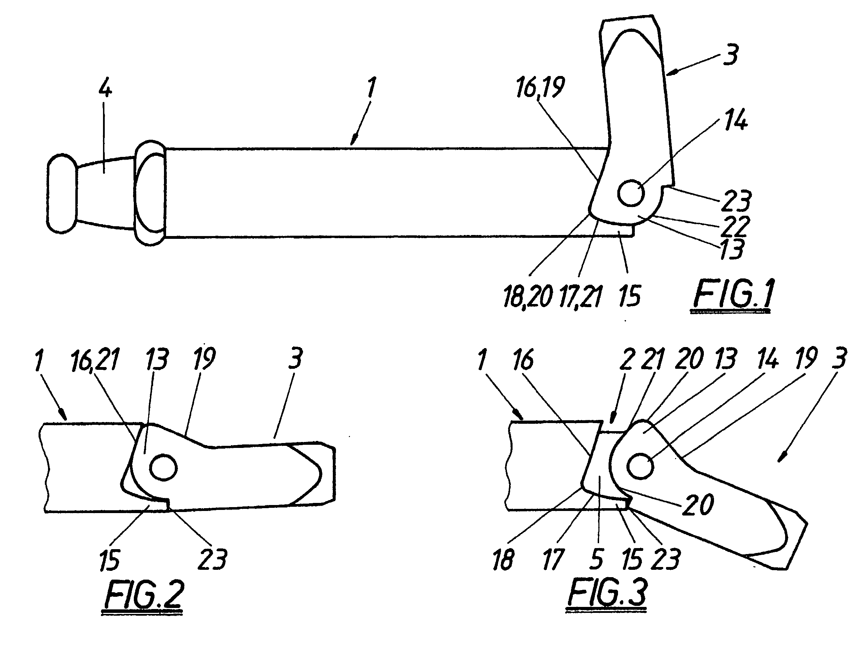

Der Scharnierlappen 5 des Scharniergleitteiles 2 ist am Ende in üblicher Weise abgerundet und besitzt in seiner Mitte ein Scharnierloch 12, das im Zusammenwirken mit entsprechenden Scharnierlöchern in Scharnierlappen 13 des Scharnierfrontteiles 3 eine z. B. über eine Schraube gesicherte Scharnierachse 14 aufnimmt. Die Ober- bzw. Unterseite der Scharnierlappen 13 fluchtet mit der Ober- bzw. Unterseite des Führungsgehäuses 1. Am Führungsgehäuse 1 ist die Außenwand zu einem Vorsprung 15 geformt, von dem in der Ober- und Unterseite und auch in der Innenwand des Führungsgehäuses 1 an die Form der Scharnierlappen 13 angepaßte Ausschnitte ausgehen, die zwei vorderseitige Schrägflächen 16, 17 mit gerundetem Übergang 18 darstellen. Die Scharnierlappen 13 des Scharnierfrontteiles 3 sind, wie insbesondere Fig. 3 zeigt, nach der Innenseite hin nach einer Schrägfläche 19 auf die Breite des Führungsgehäuses 1 verbreitert. An diese Schrägfläche 19 schließt über eine Rundung 20 eine weitere Schrägfläche 21 an, von deren Ende eine zur Achse 18 konzentrische Rundung 22 bis zu einem Absatz 23 reicht. In der abgewinkelten Stellung des Scharnieres liegt die Schrägfläche 19 des Scharnierlappens 13 an der Schrägfläche 16 des Gehäuses an und es liegen auch die Schrägflächen 17, 21 und die Rundungen 18, 20 in- bzw. aneinander, so daß die durch die Feder 8 aneinandergedrückten Scharnierteile 1, 3 eine genau definierte Schwenklage einnehmen. Aus der Stellung nach Fig. 1 kann das Scharnier in die Strecklage nach Fig. 2, die der normalen Gebrauchslage der Brille entspricht, verschwenkt werden, wobei in dieser Strecklage die Schrägflächen 16 und 21 aneinanderliegen und der Absatz 23 am Anschlagende des vorgezogenen Seitenwandteiles 15 aufrastet, wodurch auch diese Strecklage unter der Federvorspannung eindeutig definiert ist. Fig. 3 zeigt, daß auch ein Überschwenken möglich ist, wobei sich der Absatz 23 am Fortsatz 15 abstützt. Bei diesem Überschwenken wird der Scharniergleitteil 2 unter weiterer Vorspannung der Feder 8 weiter aus dem Führungsgehäuse 1 herausgezogen, als dies bei der normalen Verschwenkung des Scharnieres zwischen den Endstellungen nach Fig. 1 und 2 der Fall ist. Bei dieser Verschwenkung zwischen den Endstellungen nach Fig. 1 und 2 gleitet die Abrundung 20 der Scharnierlappen 13 auf der Führungsfläche 16, woduch die Feder 8 im jeweils erforderlichen Maß herausgezogen wird.

## Patentansprüche

1. Federscharnier für Brillen, mit einem bügelseitigen Führungsgehäuse (1) in dem ein Scharniergleitteil (2) aufgenommen ist, der an einem aus dem Gehäuse (1) herausragenden Scharnierlappen (5) gegen eine innerhalb des Gehäuses (1) an ihm und dem Gehäuse (1) abgestützte, vorgespannte Druckfeder (8) begrenzt in Längsrichtung aus dem Gehäuse (1) herausziehbar und am Scharnierlappen (5) über einen etwa auf der Längsmittelebene des Führungsgehäuses (1) angeordneten Scharnierzapfen (14) mit dem bzw. den Scharnierlappen (13) eines am Brillengestell anbringbaren Scharnierfrontteiles (3) verbindbar ist, wobei der Scharnierfrontteil (3) und das scharnierseitige Ende des Führungsgehäuses (1) bei der Bügelverschwenkung zusammenwirkende Gleitflächen (16, 20) und Rastflächen (16, 17, 19, 21) aufweisen, die Schwenkendstellungen des sich bei der Streckstellung des Scharnieres (Fig. 2) in der Gebrauchslage und bei abgewinkeltem Scharnier (Fig. 1) in der an das Brillengestell angeklappten Lage befindlichen Bügels bestimmen, **dadurch gekennzeichnet, daß** die Breite des Scharnierfrontteiles (3) gleich der oder kleiner als die Breite des Führungsgehäuses (1) gewählt ist, wobei das in seiner Grundform im Querschnitt rechteckige, prismatische Führungsgehäuse (1) für das durch die Feder (8) in der abgewinkelten Schwenkendstellung (Fig. 1) gehaltenem Scharnier in der Ober- und Unterseite einen bis neben den Scharnierzapfen (14) reichenden, Ausschnitt (16, 17, 18) aufweist, der sich bis zu einem von der Außenwand des Führungsgehäuses gebildeten Vorsprung (15) erstreckt, welch letzterer seinerseits in dieser abgewinkelten Stellung des Scharnieres bis neben den Scharnierzapfen (14) reicht und zur Aufnahme des entsprechenden innenseitig über die Scharnierachse vorstehenden Scharnierlappenbereiches (19, 20, 21) des Scharnierfrontteiles (3) dient und der Scharnierfrontteil (3) in der gestreckten, definierten Schwenkendstellung (Fig. 2) mit seiner Außenseite zumindest im wesentlichen mit der Außenseite des Führungsgehäuses (1) fluchtet, wobei sein Scharnierlappen (13) bzw. seine Scharnierlappen einen Absatz (23) als Anschlag für den außenseitigen Vorsprung (15) des Führungsgehäuses (1) bei in der Streckstellung (Fig. 2) befindlichem Scharnier aufweisen.

2. Federscharnier nach Anspruch 1, **dadurch gekennzeichnet, daß** der Scharniergleitteil (2) mit seinem Scharnierlappen (5) als flaches Bauelement mit nur einen Bruchteil der Höhe des Führungsgehäuses (1) betragender Dicke ausgebildet und durch eine angepaßte Endöffnung (6) des Führungsgehäuses (1) zwischen zwei Scharnierendlappen (13) des Scharnierfrontteiles (3) herausgeführt ist, deren Ober- bzw. Unterseite im wesentlichen eben mit der Oberund Unterseite des Führungsgehäuses (1) fluchtet.

3. Federscharnier nach den Ansprüchen 1 und 2, **dadurch gekennzeichnet, daß** die Scharnierlappen (13) des Scharnierfrontteiles (3) innenseitig in einem über das Schamierloch hinausragenden Bereich nach einer Abschrägung (19) verbreitert sind, an diese Abschrägung (19) mit gerundetem Übergang (20) eine weitere Schrägseite (21) spitz- oder rechtwinkelig bis etwa zu der durch die Scharnierachse gehenden Längsebene des Scharnierfrontteiles anschließt und diese Schrägseite über eine weitere, zum Scharnierloch konzentrische kreisförmige Rundung (22) mit der Innenseite des den Anschlag bildenden Absatzes (23) verbunden ist, wobei die Form des Ausschnittes (16, 17, 18) des Führungsgehäuses dieser Umrißform der Scharnierlappen (13) zwischen den Schrägseiten (19, 21) entspricht.

4. Federscharnier nach einem der Ansprüche 1 bis 3, **dadurch gekennzeichnet, daß** der Scharniergleitteil (2) von dem über ein Verbindungselement (4) abschließbaren Hinterende her in das Führungsgehäuse (1) ein- und mit seinem Scharnierlappen (5) durch die angepaßte Endöffnung (6) durchsteckbar ausgebildet ist und im Abstand von dieser Endöffnung (6) ein Langloch (7) aufweist, an dessen Enden sich die vorgespannte Druckfeder (8) bei der Montage mit beiden Enden abstützt, wobei die vorzugsweise als zylindrische Schraubenfeder ausgebildete Druckfeder (8) einen der Breite des Langloches (7) entsprechenden, größer als die Dicke des Scharniergleitteiles (2) im Langlochbereich gehaltenem Durchmesser aufweist und sich beim Herausziehen des Scharnierlappens mit dem überstehenden Teil des Federendes (10) innenseitig am Rand der Endöffnung (6) des Führungsgehäuses (1) abstützt.

## Claims

1. A spring hinge for spectacles, with a guide housing (1) adjacent the side-piece and receiving a hinge sliding part (2) which, on a hinge lug (5) projecting from the housing (1), can be withdrawn from the housing (1) in the longitudinal direction to a limited degree against a biased compression spring (8) supported inside the housing (1) on the latter and on the lug (5), and is connectable on the hinge lug, via a hinge pin (14) disposed substantially on the longitudinal central plane of the guide housing (1), to the or each hinge lug (13) of a hinge front part (3) mountable on the spectacles frame, the hinge front part (3) and the end of the guide housing (1) adjacent the hinge having retention surfaces (16, 17, 19, 21) and sliding surfaces (16, 20) which co-operate on pivoting of the side-piece, said retention surfaces defining pivoted end positions of the side-piece which is in the position of use when the hinge is in the extended position (Fig. 2) and in the position pivoted against the spectacles frame when the hinge (Fig. 1) is at an angle, **characterised in that** the width of the hinge front part (3) is equal to or less than the width of the guide housing (1), while the prismatic guide housing (1), which in its basic form is rectangular in cross-section, for the hinge held by the spring (8) at an angle in the pivoted end position (Fig. 1) has at the top and underside a cut-out (16, 17, 18) extending to next to the hinge pin (14), said cut-out extending as far as a projection (15) which is formed by the outer wall of the guide housing and which in turn in this angled position of the hinge extends to next to the hinge pin (14) and serves to receive the corresponding hinge lug zone (19, 20, 21) of the hinge front part (3) projecting on the inside beyond the hinge axis and the hinge front part (3) in the extended defined pivoted end position (Fig. 2) is in alignment by its outside at least substantially with the outside of the guide housing (1), its hinge lug or lugs (13) having a shoulder (23) as an abutment for the outside projection (15) of the guide housing (1) when the hinge is in the extended position (Fig. 2).

2. A spring hinge according to claim 1, **characterised in that** the hinge sliding part (2) with its hinge lug (5) is formed as a flat component with a thickness equal to just a fraction of the height of the guide housing (1), and is taken out between two hinge end lugs (13) of the hinge front part (3) through an adapted end opening (6) of the guide housing (1), the top and underside thereof being substantially flush with the top and underside of the guide housing (1).

3. A spring hinge according to claims 1 and 2, **characterised in that** the hinge lugs (13) of the hinge front part (3) are widened on the inside after a chamfer (19) into a zone projecting beyond the hinge hole, adjoining said chamfer (19) with a rounded transition is another inclined side (21) at an acute angle or at a right angle as far as substantially the longitudinal plane of the hinge front part passing through the hinge axis and said inclined side is connected, by another circular rounding (22) concentric to the hinge hole, to the inside of the shoulder (23) forming the abutment, the shape of the cut-out (16, 17, 18) of the guide housing corresponding to this contour shape of the hinge lugs (13) between the inclined sides (19, 21).

4. A spring hinge according to any one of claims 1 to 3, **characterised in that** the hinge sliding part (2) is constructed to be pushable, from the rear end terminating by a connecting element (4), into the guide housing (1) and, by its hinge lug (5), through the adapted end opening (6) and has at a distance from said end opening (6) a slot (7) at the ends of which the biased compression spring (8) bears by both ends on assembly, while the compression spring (8) constructed preferably as a cylindrical coil spring has a diameter corresponding to the width of the slot (7) and made larger than the thickness of the hinge sliding part (2) in the slot zone and on withdrawal of the hinge lug bears by the projecting part of the spring end (10) on the inside against the edge of the end opening (6) of the guide housing (1).

## Revendications

1. Charnière élastique pour lunettes, avec un boîtier de guidage (1), situé côté branches, dans lequel est logée une partie de glissement de charnière (2), susceptible d'être extraite hors du boîtier (1), de façon limitée, en direction longitudinale, depuis une patte de charnière (5), sortant du boîtier (1), à l'encontre de la force d'un ressort de compression (8) précontraint, soutenu à l'intérieur du boîtier (1), sur la patte de charnière (5) et le boîtier (1), et étant susceptible d'être reliée, par l'intermédiaire d'un téton de charnière (14), disposé à peu près dans le plan médian longitudinal du boîtier de guidage (1), à la patte de charnière, respectivement aux pattes de charnière (13) d'une partie avant de charnière (3), pouvant être rapportée sur la monture de lunettes, où la partie avant de charnière (3) et l'extrémité, côté charnière, du boîtier de guidage (1), présentent, des faces de glissement (16, 20) et des faces d'encliquetage (16, 17, 19, 21) qui coopèrent lors du pivotement des branches, qui déterminent les positions finales de pivotement de la branche, qui se trouve en position d'utilisation, lorsque la charnière est à la position étendue (Fig. 2), et se trouve à la position ramenée par rabattement sur la monture de lunettes lorsque la charnière est repliée (Fig. 1), **caractérisée en ce que** la largeur de la partie avant de charnière (3) est choisie égale ou inférieure à la largeur du boîtier de guidage (1), sachant que le boîtier de guidage (1), dont la forme de base présente une section transversale prismatique, rectangulaire, pour la charnière maintenue à la position finale de pivotement repliée par le ressort (8) (Fig. 1), présente, dans la face supérieure et inférieure, une découpure (16, 17, 18) allant jusqu'à se trouver à côté du téton de charnière (14), découpure s'étendant jusqu'à une saillie (15) formée par la paroi extérieure du boîtier de charnière, cette dernière saillie, de son côté, dans cette position repliée de la charnière, arrivant jusqu'à se trouver à côté du téton de charnière (14), et qui sert à loger la zone de patte de charnière (19, 20, 21) correspondante, en saillie intérieurement, sur l'axe de charnière, de la partie avant de charnière (3), et la partie avant de charnière (3), à la position finale de pivotement définie, étirée (Fig. 2), étant au moins pratiquement alignée par sa face extérieure avec la face extérieure du boîtier de guidage (1), sa patte de charnière (13), respectivement ses pattes de charnière, présentant un décrochement (23) servant de butée pour la saillie (15), située extérieurement, du boîtier de guidage (1), lorsque la charnière se trouve à la position étirée (Fig. 2).

2. Charnière élastique selon la revendication 1, **caractérisée en ce que** la partie de glissement de charnière (2), avec sa patte de charnière (5), est réalisée sous forme de composant plat, ayant une épaisseur qui ne fait qu'une fraction de la hauteur du boîtier de guidage (1), et sortie de façon guidée, en passant par une ouverture finale (6), adaptée, du boîtier de guidage (1), entre deux pattes finales de charnière (13) de la partie avant de charnière (3), dont la face supérieure, respectivement inférieure, est sensiblement alignée, de façon plane, avec la face supérieure et inférieure du boîtier de guidage (1).

3. Charnière élastique selon les revendications 1 2, **caractérisée en ce que** les pattes de charnière (13) de la partie avant de charnière (3) sont élargies intérieurement dans une zone passant sur le trou de charnière, en direction d'un chanfrein (19), à ce chanfrein (19), par une transition (20) arrondie, se raccordant une autre face oblique (21), faisant un angle aigu ou un angle droit jusqu'à à peu près le plan longitudinal passant par l'axe de charnière de la partie avant de charnière, et cette face oblique étant reliée, par l'intermédiaire d'un autre arrondi (22) en forme de cercle, concentrique par rapport au trou de charnière, à la face intérieure du décrochement (23) formant la butée, sachant que la forme de la découpure (16, 17, 18) du boîtier de guidage correspond à cette forme de profil des pattes de charnière (13) entre les faces obliques (19, 21).

4. Charnière élastique selon l'une des revendications 1 à 3, **caractérisée en ce que** la partie de glissement de charnière (2) est réalisée de façon à pouvoir être embrochée dans le boîtier de guidage (1), par l'extrémité arrière, pouvant être délimitée par un élément de liaison (4), et est réalisée de façon à pouvoir être passée, par sa patte de charnière (5), à travers l'ouverture d'extrémité (6) adaptée, et présente, à distance de cette ouverture finale (6), un trou oblong (7) aux extrémités duquel le ressort de compression (8) précontraint prend appui par les deux extrémités lors du montage, sachant que le ressort de compression (8) est réalisé de préférence sous la forme de ressort hélicoïdal cylindrique, présente un diamètre correspondant à la largeur du trou oblong (7), diamètre maintenu supérieur à l'épaisseur de la partie de glissement de charnière (2) dans la zone du trou oblong et, lors de l'extraction de la patte de charnière, prend appui, par la partie en saillie de l'extrémité de ressort (10), intérieurement sur le bord de l'ouverture d'extrémité (6) du boîtier de guidage (1).
